# EUROPÄISCHE PATENTSCHRIFT

(11) **EP 2 154 037 B1**
(45) Veröffentlichungstag und Bekanntmachung des Hinweises auf die Patenterteilung: **19.06.2013**
(21) Anmeldenummer: 09100358.2
(22) Anmeldetag: 16.07.2009
(51) Int. Cl.: B60S 1/04

(54) **Scheibenwischervorrichtung**
Window wiper device
Dispositif essuie-glace

(30) Priorität: 14.08.2008 DE 102008041270
(43) Veröffentlichungstag der Anmeldung: 17.02.2010
(73) Patentinhaber: ROBERT BOSCH GMBH, 70442 Stuttgart (DE)
(72) Erfinder: Benner, Andreas, 77830, Buehlertal (DE); Boos, Tino, 76532, Baden-Baden (DE); Kraus, Achim, 77815, Buehl (DE)

(56) Entgegenhaltungen:
- EP-A1- 0 430 375
- DE-A1- 19 855 741
- FR-A1- 2 783 223
- FR-A1- 2 783 477

## Beschreibung

Die Erfindung betrifft eine Scheibenwischervorrichtung für ein Kraftfahrzeug mit einem Wischermotor, der über einen Befestigungsmechanismus eines mit dem Wischermotor verbundenen Getriebegehäuses an einem Montagebereich einer Motorplatine befestigbar ist, wobei die Motorplatine zumindest im Montagebereich als Hohlprofil ausgebildet ist und einen rechteckigen, insbesondere quadratischen Querschnitt aufweist, mit dem sie in einen Befestigungsbereich des Getriebegehäuses einsetzbar und über ein Befestigungsmittel daran fixierbar ist.

### Stand der Technik

Scheibenwischervorrichtungen dieser Art sind bereits bekannt. Dabei ist es das Ziel, den Wischermotor möglichst sicher zu montieren und auch Biege- und Torsionsbelastungen auffangen zu können und gleichzeitig eine leichte Montage bzw. Demontage zur Verfügung zu stellen, um im Montage- und Wartungsfalle keine unnötigen Arbeitskosten zu erzeugen.

Aus der FR 2783477-A1 ist eine Befestigungsvorrichtung bekannt, über eine Klemmverbindung zwischen der Motorplatine und einer letztere umgreifenden Schalenkonstruktion eine Befestigung bereitzustellen. Allerdings ist diese Art der Befestigung aufgrund der formgenau angepassten Konturen von Schale und Motorplatine sehr fehleranfällig. Außerdem ist die Fertigung der Schalenkonstruktion sehr kostspielig.

Andere Lösungen, wie z.B. in dem Dokument EP 0 430 375 A1 offenbart, arbeiten mit flächigen, geschlossenen Profilquerschnitten, durch die Verbindungsschrauben in das Getriebegehäuse geschraubt werden. Diese bringen den Nachteil mit sich, dass gerade die Biegebelastbarkeit relativ gering ist.

Ferner werden durch die Einschraubung der Verbindungsschrauben in die als Hohlprofil ausgebildete Motorplatine bei entsprechendem Anzugsmoment Verformungen des Profils hervorrufen, was eine erneute Montage des Rechteckprofils deutlich erschwert und die Biege- und Torsionssteifigkeit negativ beeinflussen kann.

### Offenbarung der Erfindung

Es ist daher Aufgabe der vorliegenden Erfindung, eine Scheibenwischervorrichtung bereitzustellen, die eine Verformung des Rechteckprofils während der Befestigung des Wischermotors an der Motorplatine vermindert oder gar verhindert.

Diese Aufgabe wird durch die Merkmale des Anspruchs 1 gelöst.

Mit anderen Worten wird der rechteckige Montagebereich der Motorplatine insbesondere im Bereich der bei der Montage auftretenden größten plastischen Verformung durch ein separates Bauteil so gestützt, dass eine vermehrte plastische Verformung der Motorplatine unterbunden werden kann.

In einem nicht beanspruchten Ausführungsbeispiel ist mindestens ein Abstützelement durch mindestens eine das Hohlprofil bereichsweise umgebende Abstützwand gebildet. Der Bereich der größten plastischen Verformung des Rechteckprofils liegt meist im Bereich der Seitenwände, die achsparallel zu dem Befestigungsmittel verlaufen. Die Abstützwand wirkt zur Verhinderung der plastischen Verformung mit mindestens einer Seitenwand der Motorplatine zusammen. Auf diese Weise lässt sich eine mehrseitige, nämlich mindestens zweiseitige Fixierung von Motorplatine und Scheibenwischervorrichtung bewirken, so dass eine sehr gute Krafteinleitung und Verdrehsicherung der Scheibenwischervorrichtung relativ zur Motorplatine bewirkt werden kann. Insbesondere ist hierbei vorgesehen, dass die Abstützwand im Wesentlichen quer zur Motorplatinenabstützung ausgebildet ist und somit mit der Motorplatinenabstützung einen annähernd rechten Winkel einnimmt. Eine solche Ausführungsform hat ferner den Vorteil, dass die Scheibenwischervorrichtung an dem Montagebereich der Motorplatine einfach nur angelegt werden muss und anschließend verschraubt werden kann. Das Vorsehen aufwendig gestalteter Haltevorrichtungen wie z.B. zum Anbringen von Befestigungsschalen notwendig sind dabei nicht erforderlich. Dabei können die Abstützwände entweder einteilig mit dem Getriebegehäuse ausgebildet sein oder aber als separate Bauteile an dem Getriebegehäuse befestigbar sein.

Eine sehr kostengünstige Variante eines Achsstützelementes stellt in einer weiteren Ausführungsform der vorliegenden Erfindung ein in das Hohlprofil einsetzbarer Abstützkern dar. Durch Vorsehen eines Abstützkernes anstelle von Abstützwänden, kann die Geometrie des Getriebegehäuses sowohl bei der Herstellung als auch bei der Montage wesentlich einfacher gewählt werden. Das Vorsehen hochgenauer Bauteilgeometrien wie beispielsweise Einprägungen am Rohr bei der Klemmverbindung mit den damit verbundenen Kosten und Qualitätsthemen kann somit entfallen und die Montage erleichtert werden. Dies führt zu einem verminderten Materialeinsatz beim Getriebegehäuse, wodurch Gewicht und Kosten eingespart werden können, sowie zu einer Verringerung des notwendigen Bauraums. Die Abstützung von innen durch einen Abstützkern ist somit eine technisch und wirtschaftlich sehr günstige Lösung.

Das Vorsehen eines Rechteckprofils im Montagebereich, welches aus dem ursprünglich runden Rohr gebildet wird, bietet eine hinreichende Biege- und Torsionssteifigkeit. Der Abstützkern kann beispielsweise aus einem Blechteil oder aus einem Kunststoffformteil gebildet sein.

Als Befestigungsmechanismen eignen sich Schrauben, Niete, Schrauben/Muttekombina-tionen und/oder Schrauben mit selbstschneidendem Gewinde. Ist gewünscht, die form- und/oder kraftschlüssige Verbindung zwischen Getriebegehäuse und Motorplatine einstellen zu können, kann dies mittels eines Stellelements als Befestigungsmechanismus wie beispielsweise eine Stellschraube realisierbar sein.

Zur homogenen Kraftverteilung kann in einem Ausführungsbeispiel eine Druckplatte, insbesondere eine Unterlegscheibe zwischen Rechteckprofil und Befestigungsmechanismus vorgesehen sein. Ferner kann zur einfachen Positionierung eine Passschraube an dem Rechteckprofil vorgesehen sein, um den Montagebereich der Motorplatine in dem Befestigungsmechanismus auf einfache Weise auszurichten und darin zu sichern.

Hinsichtlich weiterer vorteilhafter Ausführungsformen der vorliegenden Erfindung wird auf die Unteransprüche sowie die nachfolgende Beschreibung eines Ausführungsbeispiels anhand der beiliegenden Zeichnungen verwiesen.

### Ausführungsbeispiele

Es zeigt:
- Figur 1: eine Teildarstellung einer Motorplatine mit einem als rechteckiges Hohlprofil ausgebildeten Montagebereich;
- Figur 2: eine beispielhafte Darstellung eines Getriebegehäuses mit Stützwänden; und
- Figuren 3a bis 3e: verschiedene in die Motorplatine gemäß Figur 1 einsetzbare Abstützkerne.

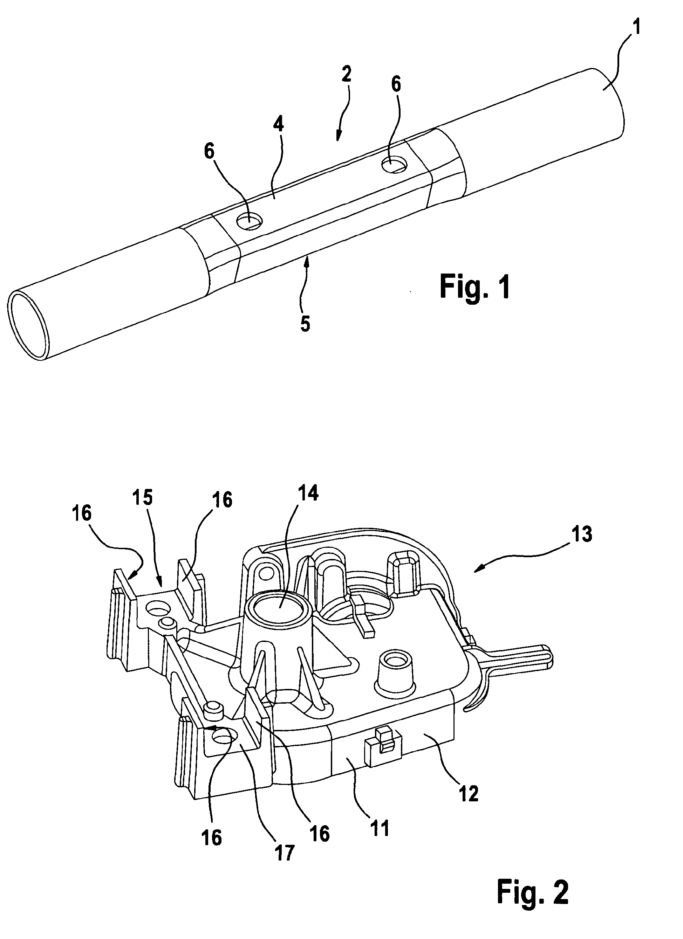

Figur 1 zeigt eine Motorplatine 1, die in einem Montagebereich 2 einen im Wesentlichen quadratischen Querschnitt aufweist, der aus Abflachungen eines im übrigen Verlauf der Motorplatine 1 runden Querschnitts gebildet ist. Der im Wesentlichen quadratische Querschnitt der Motorplatine 1 wird durch sich im Wesentlichen parallel gegenüberliegende, ebene Seitenwände 4 gebildet. Der quadratische Querschnitt kann beispielsweise durch Abflachen des im übrigen runden Querschnitts, beispielsweise durch Pressen und/oder Kaltverformung der Motorplatine 1 gewonnen werden. Der Montagebereich 2 weist an einer ebenen Seitenwand 4 und an dieser Seitenwand 4 gegenüberliegenden Seitenwand 5 Ausnehmungen beispielsweise in Form von Bohrungen oder Ausstanzungen 6 auf, die jeweils zum Einsetzen einer hier nicht dargestellten Befestigungsschraube dienen.

Figur 2 zeigt ein Getriebegehäuse 11 eines Getriebes 12 einer hier nur abschnittsweise dargestellten Scheibenwischervorrichtung 13. Das Getriebegehäuse 11 hat eine zentrale Öffnung 14, in der eine nicht dargestellte Abtriebswelle des Wischermotors gelagert ist. Im Befestigungsbereich 15 der Scheibenwischervorrichtung 13 sind Abstützwände 16 ausgebildet, um die Motorplatine 1 aufzunehmen und gegen ein Verdrehen sowie eine Verformung zu sichern. Die Stützwände 16 sind hier im Wesentlichen rechtwinklig zur Auflagefläche 17 des Montagebereichs 2 der Motorplatine 1 ausgebildet und bilden zusammen mit der Auflagefläche 17 somit die Form eines nach oben offenen U aus. Eine solche Anordnung ermöglicht ferner, eventuell ungewollt eingeleitete Torsionskräfte aufzunehmen.

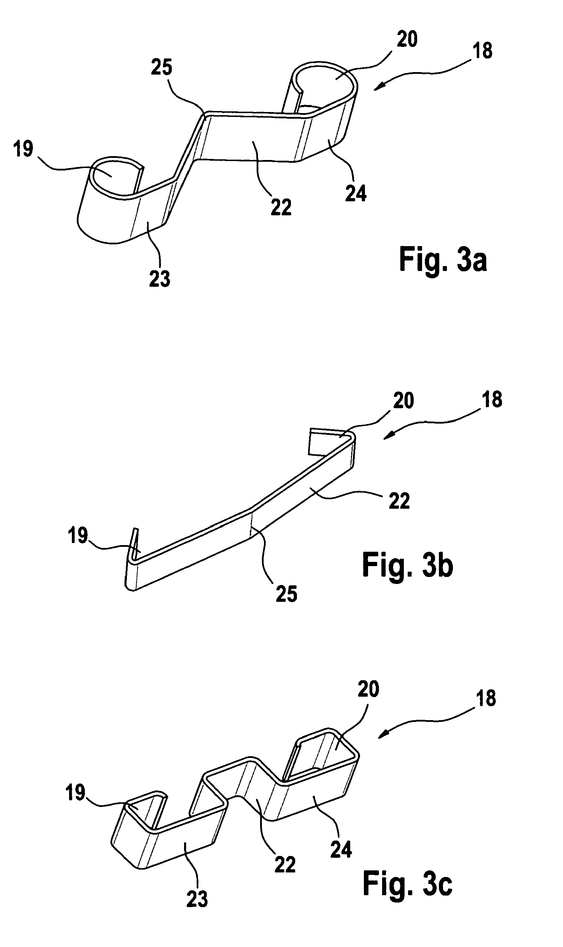

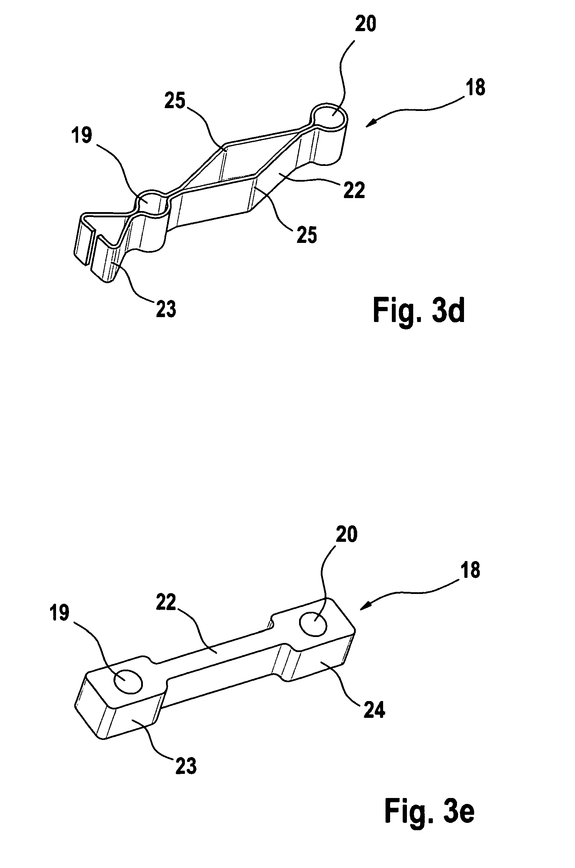

Die Figuren 3a bis 3e zeigen verschiedene mögliche Formen von in die als rechteckiges Grundprofil ausgebildete Motorplatine 1 einsetzbaren Abstützkerne 18. Die Abstützkerne 18 können dabei entweder einteilig über den gesamten Montagebereich 2 der Motorplatine 1 ausgebildet sein und dabei so geformt sein, dass sie besonders den Bereich, in den die Befestigungsschrauben zur Fixierung des Wischermotors eingesetzt werden, unterstützen. Dies ist in dem ersten Ausführungsbeispiel durch die kreisrunden Formen 19, 20 gegeben. Um eine Knickung im Bereich zwischen den einzusetzenden Schrauben zu vermeiden, weist der Abstützkern 18 einen entsprechenden Verlauf des Steges 22 auf, der so ausgebildet ist, dass er einerseits die Außenfläche der Stirnseite 18a des Rechteckprofils mit seinen Abflachungen 23, 24 berührt und andererseits mit dem zentral angeordneten Knick 25 die der Stirnseite 18a gegenüber liegende Seite 18c des Rechteckprofils ebenfalls berührt.

Eine weitere einfach zu fertigende Variante eines solchen Abstützkernes kann durch ein sehr einfaches Biegeverfahren hergestellt werden.

Natürlich ist es auch möglich, in einem nicht dargestellten Ausführungsbeispiel den Abstützkern mehrteilig auszubilden. Eine zweiteilige Ausführungsvariante weist beispielsweise die gleiche Form auf wie der Abstützkern 18, nur sind die beiden Teile im Bereich des Knickes 25 voneinander getrennt.

In allen fällen wird durch das Einlegen der Abstützkerne 18 in das Hohlprofil der Motorplatine 1 die Drucksteifigkeit der Motorplatine 1 erhöht und ein seitliches Ausbeulen des Montagebereichs 2 durch Verformung verhindert. Ein Vorsehen von Abstützwänden 16 im Getriebegehäuse 11 kann bei Einsatz von Abstützkernen 18 in einem nicht dargestellten Ausführungsbeispiel auch gänzlich entfallen.

Alle in den Figuren 3a bis 3e gezeigten Abstützkerne 18 weisen aufgrund ihrer Ausbildung als Kunststoff- oder Blechformteile federnde Eigenschaften auf, so dass auch eventuelle Toleranzeinflüsse unschädlich gemacht werden können. Des weiteren sind sie so ausgebildet, dass ihre Abmessungen leicht größer sind als die Innenabmessungen der Motorplatine 1, so dass beim Transport zur Schraubstation ein ausreichender Festsitz/Fixierung in der Motorplatine 1 bei gleichzeitig einfacher Montage gewährleistet ist.

## Patentansprüche

1. Scheibenwischervorrichtung (13) für ein Kraftfahrzeug mit einem Wischermotor und einer Motorplatine (1), wobei der Wischermotor, über einen Befestigungsmechanismus eines mit dem Wischermotor verbundenen Getriebegehäuses (11) an einem Montagebereich (3) der Motorplatine (1) befestigbar ist, wobei die Motorplatine (1) zumindest im Montagebereich (3) als Hohlprofil ausgebildet ist und einen rechteckigen, insbesondere quadratischen Querschnitt aufweist, mit dem sie in einen Befestigungsbereich (15) des Getriebegehäuses (11) einsetzbar und über ein Befestigungsmittel daran fixierbar ist, wobei zur Verminderung oder Verhinderung von Verformungen des Montagebereichs (3) der Motorplatine (1) mindestens ein Abstützelement (16, 18) am Montagebereich (3) der Motorplatine (1) vorgesehen ist, **dadurch gekennzeichnet, dass** mindestens ein Abstützelement (16, 18) durch mindestens einen in die Motorplatine (1) eingesetzten Abstützkern (18) gebildet ist.

2. Scheibenwischervorrichtung (13) nach einem der vorhergehenden Ansprüche, **dadurch gekennzeichnet, dass** der Befestigungsmechanismus mindestens eine Schraube, eine Niet, eine Schrauben/Mutterkombination und/oder eine Schraube mit selbstschneidendem Gewinde aufweist.

3. Scheibenwischervorrichtung (13) nach einem der vorhergehenden Ansprüche, **dadurch gekennzeichnet, dass** der Abstützkern (18) aus einem Blechteil oder einem Kunststoff formteil gebildet ist.

4. Scheibenwischervorrichtung (13) nach einem der vorhergehenden Ansprüche, **dadurch gekennzeichnet, dass** die form- und/oder kraftschlüssige Verbindung zwischen Getrie-begehäuse (11) und Motorplatine (1) mittels eines Stellelementes, insbesondere einer Stellschraube einstellbar ist.

5. Scheibenwischervorrichtung (13) nach einem der vorhergehenden Ansprüche, **dadurch gekennzeichnet, dass** die für die kraftschlüssige Verbindung notwendige Krafteinleitung über eine Druckplatte, insbesondere eine Unterlegscheibe und eine Druckschraube erfolgt.

6. Scheibenwischervorrichtung (13) nach einem der vorhergehenden Ansprüche, **dadurch gekennzeichnet, dass** eine Passschraube zur Ausrichtung und Sicherung des Montagebereichs (3) der Motorplatine (1) in dem Befestigungsmechanismus vorgesehen ist.

## Claims

1. Window wiper apparatus (13) for a motor vehicle having a wiper motor and a motor mounting plate (1), it being possible for the wiper motor to be fastened to a mounting region (3) of the motor mounting plate (1) via a fastening mechanism of a gear-mechanism housing (11) which is connected to the wiper motor, the motor mounting plate (1) being configured as a hollow profile at least in the mounting region (3) and having a rectangular, in particular square, cross section, by way of which it can be inserted into a fastening region (15) of the gear-mechanism housing (11) and can be fixed thereto via a fastening means, at least one supporting element (16, 18) being provided on the mounting region (3) of the motor mounting plate (1) in order to reduce or prevent deformations of the mounting region (3) of the motor mounting plate (1), **characterized in that** at least one supporting element (16, 18) is formed by at least one supporting core (18) which is inserted into the motor mounting plate (1).

2. Window wiper apparatus (13) according to one of the preceding claims, **characterized in that** the fastening mechanism has at least one screw, one rivet, one screw/nut combination and/or one screw with a self-tapping thread.

3. Window wiper apparatus (13) according to one of the preceding claims, **characterized in that** the supporting core (18) is formed from a sheet-metal part or a plastic shaped part.

4. Window wiper apparatus (13) according to one of the preceding claims, **characterized in that** the positively locking and/or non-positive connection between the gear-mechanism housing (11) and the motor mounting plate (1) can be set by means of a setting element, in particular a setting screw.

5. Window wiper apparatus (13) according to one of the preceding claims, **characterized in that** the introduction of force which is necessary for the non-positive connection takes place via a pressure plate, in particular a washer and a clamping screw.

6. Window wiper apparatus (13) according to one of the preceding claims, **characterized in that** a locating screw is provided for orienting and securing the mounting region (3) of the motor mounting plate (1) in the fastening mechanism.

## Revendications

1. Dispositif d'essuie-glace (13) pour un véhicule automobile comprenant un moteur d'essuie-glace et une platine de moteur (1), le moteur d'essuie-glace pouvant être fixé, par le biais d'un mécanisme de fixation d'un boîtier de transmission (11) raccordé au moteur d'essuie-glace, à une région de montage (3) de la platine de moteur (1), la platine de moteur (1) étant réalisée au moins dans la région de montage (3) sous forme de profilé creux et présentant une section transversale rectangulaire, en particulier carrée, avec laquelle elle peut être insérée dans une région de fixation (15) du boîtier de transmission (11) et peut être fixée à celle-ci par le biais d'un moyen de fixation, au moins un élément de support (16, 18) étant prévu au niveau de la région de montage (3) de la platine de moteur (1) pour réduire ou empêcher des déformations de la région de montage (3) de la platine de moteur (1), **caractérisé en ce qu'**au moins un élément de support (16, 18) est formé par au moins un noyau de support (18) inséré dans la platine de moteur (1).

2. Dispositif d'essuie-glace (13) selon l'une quelconque des revendications précédentes, **caractérisé en ce que** le mécanisme de fixation présente au moins une vis, un rivet, une combinaison vis/écrou et/ou une vis avec un filetage autotaraudant.

3. Dispositif d'essuie-glace (13) selon l'une quelconque des revendications précédentes, **caractérisé en ce que** le noyau de support (18) est formé d'une pièce en tôle ou d'une pièce moulée en plastique.

4. Dispositif d'essuie-glace (13) selon l'une quelconque des revendications précédentes, **caractérisé en ce que** la liaison par engagement par correspondance de forme et/ou par force entre le boîtier de transmission (11) et la platine de moteur (1) peut être ajustée au moyen d'un élément de réglage, en particulier d'une vis de réglage.

5. Dispositif d'essuie-glace (13) selon l'une quelconque des revendications précédentes, **caractérisé en ce que** l'introduction de force nécessaire pour la connexion par engagement par force a lieu par le biais d'une plaque de pression, en particulier par une rondelle et une vis de pression.

6. Dispositif d'essuie-glace (13) selon l'une quelconque des revendications précédentes, **caractérisé en ce qu'**une vis d'ajustement est prévue pour l'orientation et la fixation de la région de montage (3) de la platine de moteur (1) dans le mécanisme de fixation.
